# EUROPÄISCHE PATENTSCHRIFT

(11) **EP 2 965 863 B1**
(45) Veröffentlichungstag und Bekanntmachung des Hinweises auf die Patenterteilung: **24.05.2017**
(21) Anmeldenummer: 15175658.2
(22) Anmeldetag: 07.07.2015
(51) Int. Cl.: B23Q 11/10, B23B 31/20, B23B 27/10, B23B 29/04

(54) **KÜHL- ODER SCHMIERMITTELZUFÜHRUNG ZU DREHFESTEN WERKZEUGEN**
SUPPLY OF COOLANT OR LUBRICANT TO NON ROTATING TOOLS
INTRODUCTION DE LUBRIFIANT ET DE LIQUIDE DE REFROIDISSEMENT DANS DES OUTILS FIXES DE TOURNAGE

(30) Priorität: 07.07.2014 CH 10182014
(43) Veröffentlichungstag der Anmeldung: 13.01.2016
(73) Patentinhaber: Rego-Fix AG, 4456 Tenniken (CH)
(72) Erfinder: Evans, Clive, Bristol, Bristol BS30 5PN (GB)
(74) Vertreter: Braun, André jr.

(56) Entgegenhaltungen:
- FR-A1- 2 695 341
- FR-A1- 2 997 878
- US-A- 4 570 952
- US-A1- 2014 054 866

## Beschreibung

Die Erfindung betrifft eine Vorrichtung zur Zuführung von Kühl- oder Schmierflüssigkeit zu Drehwerkzeugen, die in Drehmaschinen eingespannt sind gemäss dem Oberbegriff des Anspruchs 1 (siehe z.B. FR-2997878). Es ist bekannt, in Werkzeugmaschinen mit drehenden Werkzeugen, die keine oder nur eine entlang der Aussenseite des Werkzeugs erfolgende Zuführung von Kühl- oder Schmierflüssigkeit zur Werkzeugschneide aufweisen, durch geeignete Vorrichtungen eine Zuführung von Kühl- oder Schmierflüssigkeit zu einem im Inneren des Werkzeugs verlaufenden Kanal vorzusehen (Innenkühlung). In EP 2 493 654 B1 ist beispielsweise eine solche Vorrichtung beschrieben, die eine innere mit einem eingesetzten Werkzeug fest verbundene Hülse und eine äussere, relativ zum Werkzeug feststehende Hülse umfasst, wobei die beiden Hülsen gegeneinander abgedichtet sind und die äussere Hülse mit einem Anschluss für eine Kühl- oder Schmiermittelleitung versehen ist.

Die Schneidenkühlung sowie der Abtransport von Spänen während der Bearbeitung ist auch bei Drehmaschinen ein wichtiges Thema. Bei der spanenden Fertigung auf Drehautomaten kann durch gezielte Kühlung an der Schneide eine Standzeiterhöhung der Werkzeuge und eine bessere Oberflächengüte erreicht werden. Für Drehmaschinen wurde aber eine Lösung, wie sie von drehenden Werkzeugen bekannt ist, bisher nicht als erforderlich betrachtet, weil die Zuführung einer Kühl- oder Schmierflüssigkeit zur Schneide eines feststehenden Werkzeug ohne weiteres möglich ist.

Nun hat sich herausgestellt, dass auch mit Drehautomaten mittels Innenkühlung mit optimierten Schnittparametern zur Erhöhung des Outputs gearbeitet werden kann.

Der Erfindung liegt die Aufgabe zugrunde, eine Zuführung für Kühl- oder Schmierflüssigkeit zur Rückseite, d.h. der Schneide abgewandten Seite eines für die Innenkühlung mit einem Kanal versehenen Werkzeugs in einer Drehmaschine bereitzustellen. Dabei ist wegen der immer enger werdenden Platzverhältnisse in modernen Langdrehautomaten, eine möglichst kompakte Lösung für die Innenkühlung notwendig.

Diese Aufgabe wird erfindungsgemäss gelöst durch eine Vorrichtung der eingangs beschriebenen Art, die sich durch die kennzeichnenden Merkmale des Anspruchs 1 auszeichnet.

Im Folgenden wird anhand der beiliegenden Zeichnungen ein bevorzugtes Ausführungsbeispiel der Erfindung beschrieben. Es zeigen
- Fig. 1: ein Werkzeughalter einer Drehmaschine mit einer Kühlmittelzuführungsvorrichtung teilweise im Schnitt,
- Fig. 2: eine auseinander gezogene Darstellung der in Fig. 1 gezeigten Kühlmittelzuführung
- Fig. 3.: eine alternative Ausführungsform einer erfindungsgemässen Zuführungsvorrichtung teilweise im Schnitt,
- Fig. 4: ein für die Vorrichtung geeigneter Spannschlüssel.

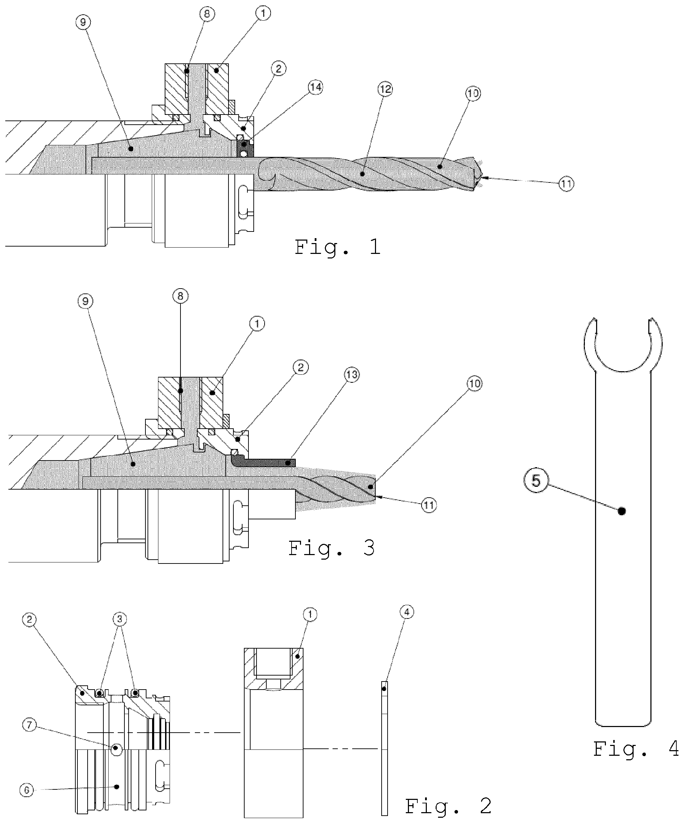

Wie in den Fig. 1 und 2 gezeigt, weist ein Werkzeughalter einer Drehmaschine einen Aufnahmekonus für eine handelsübliche Spannzange 9 des Typs HK mit einer zylindrischen Bohrung zur Aufnahme des Schafts eines Werkzeugs 10 mit einer Schneide 11 auf. Die Spannzange mit eingesetztem Werkzeug wird in bekannter Weise mittels einer Spannmutter 2, die auf ein Aussengewinde am Werkzeughalter geschraubt wird, in den Aufnahmekonus gepresst, um den Werkzeugschaft in der Spannzange zu fixieren.

Für das Aufschrauben und Lösen der Spannmutter ist diese mit einem an sich bekannten stirnseitigen oder radialen Profil versehen, in das ein in die Profilnuten passender Schlüssel 5 eingreift, der schematisch in Fig. 4 gezeigt ist.

Radial innerhalb der Profilnuten ist in die werkzeugseitige Öffnung der Spannmutter eine an sich bekannte Dichtscheibe 14 eingesetzt, die den Innenraum gegenüber der Aussenseite abdichtet, so dass Kühl- oder Schmierflüssigkeit nur über einen im Werkzeug vorhandenen Kanal zur Schneide gelangen kann.

Die Spannmutter 2 ist gleichzeitig als Innenhülse einer Zuführungsvorrichtung für Kühl- oder Schmierflüssigkeit ausgebildet. Zu diesem Zweck ist eine äussere Zylinderfläche an der Aussenseite der Spannmutter mit drei axial beabstandeten umlaufenden Nuten versehen, von denen die mittlere Nut 6 durch eine Anzahl von radialen Bohrungen 7 mit dem Innenraum der Spannmutter verbunden ist. Die beiden anderen Nuten dienen der Aufnahme von Dichtungsringen 3.

Eine ringförmige Aussenhülse 1 besitzt eine innere Zylinderfläche mit einem Durchmesser, der derart dem Durchmesser der äusseren Zylinderfläche der Spannmutter entspricht, dass sich im zusammengefügten Zustand ein Sitz der Aussenhülse auf der Spannmutter bzw. Innenhülse in der Art eines Gleitlagers ergibt. In der zusammengefügten Position ist die Aussenhülse gegen axiale Bewegung mit einem Sicherungsring 4 gesichert, für den die Spannmutter eine weitere umlaufende Nut werkzeugseitig der äusseren Zylinderfläche aufweist. Durch die Dichtungsringe 3 ist ein minimaler Ringspalt zwischen Innen- und Aussenhülse beidseitig der mittleren Nut zuverlässig abgedichtet. Die Spannmutter bzw. Innenhülse 2 ist somit in der Aussenhülse drehbar.

Die Nuten für die beiden Dichtungsringe können alternativ auch in der Aussenhülse angeordnet sein. Auch die mittlere Nut, in der die Verteilung der Flüssigkeit zu den radialen Bohrungen 7 erfolgt, kann alternativ in der inneren Zylinderfläche der Aussenhülse angeordnet sein.

Die Aussenhülse 1 ist mit einem an sich bekannten Anschluss 8 für einen Schlauchfitting, d.h. mit einer durchgängigen Gewindebohrung versehen. Wenn die Vorrichtung mit Kühl- oder Schmierflüssigkeit beaufschlagt wird, gelangt diese durch die Bohrung in der Aussenhülse zur mittleren umlaufenden Nut 6 und weiter durch die Bohrungen 7 in der Innenhülse zur Spannzange. Durch die Schlitze der Spannzange gelangt die Kühl- oder Schmierflüssigkeit zur Rückseite des Werkzeugs und in einen im Werkzeug vorhandenen axialen Kanal.

Durch die Verdrehbarkeit zwischen der Aussenhülse und der Spannmutter bzw. Innenhülse kann die Spannmutter für einen Werkzeugwechsel gelöst und anschliessend wieder festgezogen werden, ohne dass der Zuführungsschlauch von der Aussenhülse entfernt wird. Der Werkzeugwechsel ist daher sehr einfach direkt in der Maschine möglich.

In dem in Fig. 3 gezeigten Ausführungsbeispiel ist in die werkzeugseitige Öffnung der Spannmutter eine an sich bekannte Kühlscheibe eingesetzt, welche eine laminar an der Werkzeugaussenseite entlang strömenden Kühl- oder Schmierflüssigkeitsschicht erzeugt. Im Übrigen ist diese Ausführungsform mit der vorangehend beschriebenen identisch.

## Patentansprüche

1. Vorrichtung zur Zuführung von Kühl- oder Schmierflüssigkeit zu drehfesten, in Drehmaschinen eingespannten Werkzeugen, aufweisend:
- eine Spannmutter (2) zum Einspannen einer Spannzange mit eingesetztem Werkzeugschaft,
- eine an der Aussenseite der Spannmutter angeordneten äussere Zylinderfläche, und **gekennzeichnet durch**
- eine oder mehrere von der äusseren Zylinderfläche zur Innenseite der Spannmutter führende Bohrungen (7),
- eine ringförmige Aussenhülse (1) mit einer auf die äussere Zylinderfläche der Spannmutter passenden inneren Zylinderfläche, derart, dass die Aussenhülse relativ zur Spannmutter drehbar ist,
- einen zur Innenfläche der Aussenhülse führenden Schlauchanschluss (8) zur Zuführung von Kühl- oder Schmierflüssigkeit
- eine in der äusseren Zylinderfläche der Spannmutter angeordnete Ringnut (6) zur Verteilung der Kühl- oder Schmierflüssigkeit.

2. Zuführungsvorrichtung nach Anspruch 1, **dadurch gekennzeichnet, dass** die äussere Zylinderfläche der Spannmutter beidseits der Ringnut je eine weitere Ringnut zur Aufnahme von Dichtungsringen aufweist.

3. Zuführungsvorrichtung nach Anspruch 1, **dadurch gekennzeichnet, dass** die innere Zylinderfläche der Aussenhülse beidseits der Ringnut je eine weitere Ringnut zur Aufnahme von Dichtungsringen aufweist.

4. Zuführungsvorrichtung nach Anspruch 1, **dadurch gekennzeichnet, dass** die Spannmutter mit einem Profil für den Eingriff eines Spannschlüssels versehen ist.

## Claims

1. A device for supplying a cooling or lubricating liquid to non-rotatable tools, which are clamped in machine tools, comprising:
- a clamping nut (2) for clamping a collet with an inserted tool shaft,
- an outer cylindrical surface, which is positioned on the outside of the clamping nut,
and **characterized by**
- one or more bores (7), which lead from the outer cylindrical surface to the inside of the clamping nut,
- an annular outer sleeve (1) with an inner cylindrical surface, which fits over the outer cylindrical surface of the clamping nut, in such a way that the outer sleeve may be rotated with respect to the clamping nut,
- a tube connector (8) leading to the inner surface of the outer sleeve for supplying a cooling or lubricating liquid,
- an annular groove (6) provided in the outer cylindrical surface of the clamping nut for distributing the cooling or lubricating liquid.

2. A supplying device of claim 1, **characterized in that** the outer cylindrical surface of the clamping nut has a further annular groove on each side of the annular groove, for housing sealing rings.

3. A supplying device of claim 1, **characterized in that** the inner cylindrical surface of the outer sleeve has a further annular groove on both sides of the annular groove, for housing sealing rings.

4. A supplying device of claim 1, **characterized in that** the clamping nut is provided with a profile for engagement with a wrench.

## Revendications

1. Dispositif pour acheminer un liquide de refroidissement ou de lubrification à des outils fixes montés dans des tours, présentant :
- un écrou de tension (2) pour monter une pince de serrage avec une tige d'outil insérée,
- une surface cylindrique externe agencée du côté extérieur de l'écrou de tension,
et **caractérisé par :**
- un ou plusieurs alésages (7) menant de la surface cylindrique externe à la face intérieure de l'écrou de tension,
- une douille annulaire externe (1) avec une surface cylindrique interne s'ajustant à la surface cylindrique externe de l'écrou de tension en sorte que la douille externe puisse tourner par rapport à l'écrou de tension,
- un raccord de tuyau (8) menant à la surface interne de la douille externe pour l'acheminement de liquide de refroidissement ou de lubrification,
- une rainure annulaire (6) ménagée dans la surface cylindrique externe de l'écrou de tension pour distribuer le liquide de refroidissement ou de lubrification.

2. Dispositif d'acheminement selon la revendication 1, **caractérisé en ce que** la surface cylindrique externe de l'écrou de tension présente des deux côtés de la rainure annulaire, respectivement, une autre rainure annulaire pour recevoir des bagues d'étanchéité.

3. Dispositif d'acheminement selon la revendication 1, **caractérisé en ce que** la surface cylindrique interne de la douille externe présente des deux côtés de la rainure annulaire, respectivement, une autre rainure annulaire pour recevoir des bagues d'étanchéité.

4. Dispositif d'acheminement selon la revendication 1, **caractérisé en ce que** l'écrou de tension est pourvu d'un profil pour y imbriquer une clé de serrage.
